# EUROPÄISCHE PATENTSCHRIFT

(11) **EP 1 009 988 B1**
(45) Veröffentlichungstag und Bekanntmachung des Hinweises auf die Patenterteilung: **02.03.2005**
(21) Anmeldenummer: 98945206.5
(22) Anmeldetag: 11.08.1998
(51) Int. Cl.: G01M 17/007

(54) **EINRICHTUNG ZUM NACHSTELLEN DER DYNAMISCHEN INTRUSION VON FAHRZEUGTEILEN EINES KRAFTFAHRZEUGS BEI EINEM AUFPRALL**
DEVICE FOR RECONSTRUCTING THE DYNAMIC INTRUSION OF PARTS OF A MOTOR VEHICLE UPON A COLLISION
DISPOSITIF POUR RECONSTRUIRE L'INTRUSION DYNAMIQUE DE PARTIES D'UN VEHICULE AUTOMOBILE LORS D'UNE COLLISION

(30) Priorität: 06.09.1997 DE 19739141
(43) Veröffentlichungstag der Anmeldung: 21.06.2000
(73) Patentinhaber: Siemens Restraint Systems GmbH, 63755 Alzenau (DE)
(72) Erfinder: KAHLOT, Martin, D-55257 Budenheim (DE); RAFFAUF, Ralf, D-56070 Koblenz (DE); FRANZ, Joachim, D-63857 Waldaschaff (DE); ROTH, Willibald, D-63879 Weibersbrunn (DE); BUSS, Winfried, D-65549 Limburg (DE)
(74) Vertreter: Fuchs Mehler Weiss & Fritzsche
(86) Internationale Anmeldenummer: PCT/EP1998/005077
(87) Internationale Veröffentlichungsnummer: WO 1999/013311

(56) Entgegenhaltungen:
- WO-A-95/00828
- DE-U- 29 721 927

## Beschreibung

Die Erfindung betrifft eine Einrichtung zum Nachstellen der dynamischen Intrusion von Fahrzeugteilen eines Kraftfahrzeuges bei einem Aufprall.

Die Untersuchung von Verletzungsmöglichkeiten der Insassen eines Kraftfahrzeuges bei Unfällen durch intrudierende Fahrzeugteile und die Entwicklung geeigneter Schutzmaßnahmen ist Gegenstand intensiver Arbeiten der Automobilindustrie und damit verbundener Institutionen. Dabei rücken Verletzungen der unteren Extremitäten der Insassen, insbesondere des Fuß- bzw. des Fußgelenkbereiches, immer stärker in den Blickpunkt der Entwicklung. In realen Crashs hat sich gezeigt, daß die den vorderen Fußraum begrenzende Fußablage, auch Spritzwand genannt, nicht einfach parallel in den Fußraum geschoben wird, sondern daß die Fußablage eine Kombination aus einer translatorischen und einer überlagerten rotatorischen Bewegung ausführt.

Neben der intrudierenden Fußablage sind für die Untersuchungen auch bedeutsam die Intrusion des Lenksystems bestehend aus Lenkrad und Lenksäule, der Instrumententafel mit ggfls. vorhandenen Kniepolstern, von Teilen der Seitenwand bei einem Seitenanstoß, des Fahrzeugdaches bei einem Überschlag und der Fahrzeughinterwand mit der Sitzanlage bei einem Heckaufprall, da bei der Intrusion dieser Fahrzeugteile ebenfalls eine Bewegungsüberlagerung auftritt.

Zur Untersuchung von Unfallsituationen und deren Auswirkungen auf die Kfz-Insassen sowie zur Entwicklung, Prüfung und Einstellung von Schutzmaßnahmen, insbesondere von Rückhaltesystemen, sind gemäß dem Stand der Technik Schlittenanlagen, z.B. Hydropulsschlittenanlagen im Einsatz, die einen verfahrbar auf einer Plattform angeordneten Hauptschlitten aufweisen, der mittels eines Hydraulik- oder Pneumatik-Systems impulsartig, den Aufprall (Crash) nachstellend, beschleunigt wird. Auf dem Hauptschlitten ist eine starre Kraftfahrzeug-Rohkarosse, die gezielt verstärkt ist, um eine Mehrfachverwendung zu gewährleisten, angeordnet. Wegen der Starrheit dieser Karosse tritt jedoch eine Intrusion der beschriebenen Fahrzeugteile nicht ein, d.h. entsprechende Untersuchungen sind systembedingt mit den bekannten, in irgendeiner Weise ausgebildeten Hauptschlittenanlagen, insbesondere der Hydropulsschlittenanlage nicht durchführbar.

Derartige Schlittenanlagen sind z.B. durch die DE 195 11 422 A1, DE 195 41 318 A 1 und die JP 08 101 635 A bekannt geworden.

Um die Intrusion dieser Fahrzeugteile untersuchen und um geeignete Schutzmaßnahmen entwickeln zu können, müssen bei dem derzeitigen Stand der Technik mit den bekannten Crash-Testanlagen mit realen Kfz-Karossen eine Vielzahl von Crash-Tests durchgeführt werden, Tests, die sehr aufwendig und teuer sind und damit im beachtlichen Maße in die Entwicklungskosten der Schutzmaßnahmen eingehen.

Derartige Crash-Testanlagen sind z.B. aus der DE 195 28 026 A1 und der DE 195 29 801 C1 bekannt.

Durch die DE 44 07 256 C2 ist eine Vorrichtung zum Nachstellen der Vorgänge bei einem Seiten-Crash bekannt geworden, bei der durch ein deformierbares Bauteil ein rammendes Fahrzeug und durch ein weiteres, deformierbares Bauteil die Seitenwand/Tür des gerammten Fahrzeuges nachgestellt werden. Beim Versuchsablauf prallt das durch einen Kolben beschleunigte, den rammenden Wagen nachstellende Deformationsbauteil auf die nachgestellte Seitenstruktur des Fahrzeuges (in dem eine Messpuppe angeordnet ist), deformiert diese und schiebt sie weiter bis zum Aufprall der Messpuppe auf die Seitenstruktur.

Da die Einflüsse (Bewegungen), die die real auftretenden Deformationen auf die Belastungen der Fahrzeuginsassen haben, direkt durch entsprechend deformierbare Bauteile nachgestellt werden, müssen im bekannten Fall teure, nur einmalig verwendbare Deformationslemente eingesetzt werden. Ferner können keine definierten rotatorischen Bewegungsanteile wiederholgenau nachgestellt werden, da definiert nur ein translatorische Intrusion erzeugbar ist. Das bekannte System ist ferner mit Nachteil nicht auf einem Beschleunigungsschlitten als Zusatzausrüstung montierbar und entsprechend können insoweit keine Intrusionsvorgänge untersucht werden.

Die WO 95/00828 offenbart eine Vorrichtung, mit welcher das Crash-Verhalten im Frontbereich eines Fahrzeuges durch eine Modellstruktur simuliert werden kann. Einerseits soll die Modellstruktur mehrfach verwendbar sein, andererseits soll es möglich sein, selektiv die Eigenschaften der Frontbereiche unterschiedlicher Modelle und Typen durch eine geänderte Kalibrierung zu simulieren. Die Modellstruktur umfasst zwei jeweils zieharmonikaförmig zusammenfaltbare Seitenteile und senkrecht dazu stehende Stützelemente, wobei die Seitenteile aus einer Vielzahl von aneinander verbundenen Armen gebildet sind. Zur Simulation einer Fahrzeugkollision wird ein Stoßkolben auf die stehende Modellstruktur beschleunigt, wodurch diese verformt wird. Aufgrund der ausschließlich translatorischen Bewegung des Stoßkolbens ist mit der bekannten Vorrichtung keine realitätsnahe Intrusion darstellbar ist.

Der Erfindung liegt die Aufgabe zugrunde, eine einfache Einrichtung zu schaffen, die unter Einsparung von realen Crash-Tests zum Entwickeln und Testen von Schutzmaßnahmen ein realistisches Studium der dynamischen Intrusion besagter Fahrzeugteile ermöglicht.

Zur Lösung dieser Aufgabe sieht die Erfindung eine Einrichtung zum Nachstellen der dynamischen Intrusion von Fahrzeugteilen eines Kraftfahrzeuges bei einem Aufprall vor, mit
- einem auf einer Grundplatte verfahrbar angeordneten, die Bewegung des Fahrzeugteiles nachstellenden Intrusionsschlitten,
- einem auf den Intrusionsschlitten einwirkenden Antriebssystem zum Nachstellen der impulsartigen, bei dem Aufprall auftretenden Relativbewegung des intrudierenden Fahrzeugteiles gegenüber dem Kraftfahrzeug,
- einer Wirkvorrichtung zum Nachstellen des intrudierenden Fahrzeugteiles, die drehbar an dem Intrusionsschlitten angelenkt ist, und
- einem mit der translatorischen Bewegung des lntrusionsschlittens gekoppelten System zum Nachstellen einer mit der Intrusion einhergehenden Drehbewegung des Fahrzeugteiles beim Zusammenprall abhängig vom Verfahrweg des Intrusionsschlittens.

Die erfindungsgemäße Einrichtung zum Nachstellen der dynamischen Intrusion von Kfz-Fahrzeugteilen kann mit verhältnismäßig einfachen Mitteln und geringem Aufwand durch die Verwendung von wiederverwendbaren, starren Bauteilen oder billigen Verbrauchsteilen hergestellt werden, und erlaubt ein realitätsgetreues Studium der Einwirkung der dynamischen Intrusion dieser Fahrzeugteile bei einem Aufprall auf Körperteile der Kraftfahrzeuginsassen sowie die Entwicklung geeigneter Schutzmaßnahmen. Die Einflüsse, die die real auftretenden Deformationen auf die Belastungen der Fahrzeuginsassen haben, werden durch Anpassung des Beschleunigungsverlaufs des eindringenden starren Bauteils berücksichtigt. Ferner kann durch die Zwangskopplung der Wirkvorrichtung an die translatorische Bewegung ein rotatorischer Bewegungsanteil wiederholgenau nachgestellt werden.

Die erfindungsgemäße Einrichtung ist vielseitig einsetzbar, je nach Ausbildung der Wirkvorrichtung.

Ist gemäß einer ersten Ausgestaltung der Erfindung die Wirkvorrichtung als Fußplatte zum Nachstellen der Fußablage und/oder der Pedalerie ausgebildet,
so kann damit die Intrusion des Fußraumes bei einem Frontalaufprall nachgestellt werden.

Wenn gemäß einer zweiten Ausgestaltung der Erfindung die Wirkvorrichtung zur Aufnahme des Lenksystems des Kraftfahrzeuges bestehend aus Lenkrad und Lenksäule aufgebildet ist, so kann damit die Intrusion des Lenksystems bei einem Frontalaufprall nachgestellt werden.

Sofern gemäß einer dritten Ausführungsform der Erfindung die Wirkvorrichtung zur Aufnahme der Instrumententafel mit gegebenenfalls vorhandenen Kniepolstern ausgebildet ist, so kann damit die Intrusion der Instrumententafel sowie der gegebenenfalls vorhandenen Kniepolster bei einem Frontalaufprall nachgestellt werden.

Ist gemäß einer vierten Ausgestaltung der Erfindung die Wirkvorrichtung zur Aufnahme von Teilen der Seitenwand des Kraftfahrzeuges ausgebildet, so kann damit die Intrusion der Seitenwand bei einem seitlichen Aufprall nachgestellt werden.

Wenn gemäß einer fünften Ausgestaltung der Erfindung die Wirkvorrichtung zur Aufnahme eines Dachteiles des Kraftfahrzeuges ausgebildet ist, so kann damit die Intrusion des Fahrzeugdaches bei einem Überschlag nachgestellt werden.

Sofern gemäß einer sechsten Ausgestaltung der Erfindung die Wirkvorrichtung zum Nachstellen der Fahrzeughinterwand und der Sitzanlage ausgebildet ist, so kann damit die Intrusion dieser Fahrzeugteile bei einem Heckaufprall nachgestellt werden.

Für die Anordnung des Intrusionsschlittens mit der Grundplatte und der Wirkvorrichtung stehen dem Fachmann prinzipiell zwei Möglichkeiten zur Verfügung.

Bei der einen Variante ist die Grundplatte mit dem Intrusionsschlitten und der Wirkvorrichtung auf der Plattform des Hauptschlittens der Hauptschlittenanlage, insbesondere der Hydropulsschlittenanlage angebracht. Diese Variante erlaubt Untersuchungen der Intrusion der jeweiligen Fahrzeugteile unter den Bedingungen eines nachgestellten Crash-Falles.

Bei der zweiten Variante ist die Grundplatte mit dem Intrusionsschlitten und der Wirkvorrichtung stationär angeordnet. Dabei wird allein die bei einem Aufprall auftretende Relativbewegung des intrudierenden Fahrzeugteiles gegenüber dem Kraftfahrzeug durch das Antriebssystem erzeugt, was eine einfache Versuchsdurchführung erlaubt und für zahlreiche Zwecke ausreichend ist.

Als Antriebssystem für die Erzeugung einer impulsartigen translatorischen Bewegung des Intrusionsschlittens stehen dem Fachmann eine Reihe von Möglichkeiten zur Verfügung. So kann gemäß einer ersten Ausgestaltung der Erfindung das Antriebssystem ein Kolben-/Zylindersystem mit einer antreibenden Kolbenstange sein, das mittels eines Gasgenerators, oder hydraulisch, oder pneumatisch betätigbar ist.

Um dabei die stoßartige Belastung bei der Impulserzeugung an die Fahrzeugeigenschaften anzupassen, wird gemäß einer weiteren Ausgestaltung der Erfindung vorzugsweise ein einstufiges Ein- oder Mehrkolben-/Zylindersystem oder ein mehrstufiges Ein- oder Mehrkolben-/Zylindersystem vorgesehen, die seriell aktiviert werden.

Als Antriebssystem kann auch eine vorgespannte, entklinkbar auf der Plattform angeordnete Feder in Verbindung mit einer Stößelstange vorgesehen sein, was ein einfaches Antriebssystem ermöglicht.

Gemäß einer Weiterbildung der Erfindung kann auch das Antriebssystem ausschließlich oder zusätzlich auf die Ausnutzung der Schlittenenergie des Hauptschlittens der Hauptschlittenanlage, insbesondere der Hydropulsschlittenanlage ausgelegt sein, indem an den Hauptschlitten eine Führung für eine darauf verschiebbar gehalterte große träge Masse, die über ein Zugseil und eine Umlenkrolle mit dem Intrusionsschlitten verbunden ist, angebracht ist. Bei einem simulierten Crash mit der Hydropulsschlittenanlage entsteht dabei eine Bewegungsdifferenz zwischen der großen trägen Masse und dem Hauptschlitten. Durch die auf dem Hauptschlitten fest montierte Umlenkrolle wird aus der Bewegungsdifferenz zwischen dem Schlitten und der trägen Masse eine höhere Beschleunigung erzielt, die den Intrusionsschlitten bewegt.

Gemäß einer ersten Weiterbildung der Erfindung ist als gekoppeltes System für eine zwangsbetätigte rotatorische Bewegung der Wirkvorrichtung eine Zahnrad-Zahnstangen-Kombination vorgesehen, wobei die Zahnstange fest mit der Grundplatte und das Zahnrad mit einer Exzenter-Kurvenscheibe, an der die Wirkvorrichtung gegebenenfalls federvorgespannt aufliegt, verbunden ist.

Dieses System erlaubt eine einfache und sichere zwangsbetätigte rotatorische Bewegung der Wirkvorrichtung abhängig vom Verfahrweg des Intrusionsschlittens.

Gemäß einer weiteren Ausgestaltung der Erfindung kann anstelle der Zahnrad/Zahnstangenkombination zur Erzeugung der Kraft für eine zwangsbetätigte rotatorische Bewegung der Wirkvorrichtung abhängig vom Verfahrweg des Intrusionssschlittens auch ein Zugseil vorgesehen sein, das mit einem Ende an einem ortsfesten Gegenstand befestigt ist und das mit dem anderen Ende auf der Welle einer Exzenter-Kurvenscheibe, an der die Wirkvorrichtung aufliegt, aufgerollt ist.

Die der Erfindung zugrundeliegende Aufgabe kann auch durch eine Einrichtung zum Nachstellen der dynamischen Intrusion von Fahrzeugteilen eines Kraftfahrzeuges bei einem Aufprall gelöst werden, die besteht aus:
- einer Wirkvorrichtung zum Nachstellen des intrudierenden Fahrzeugteiles,
- einem Kolben-/Zylinder- oder Feder-Antriebssystems in Verbindung mit einer Übertragungsmechanik, an der die Wirkvorrichtung angelenkt ist, und die so ausgebildet sind, daß eine impulsartige, bei dem Aufprall auftretende Relativbewegung des intrudierenden Fahrzeugteiles gegenüber dem Kraftfahrzeug in Form einer translatorischen und einer überlagerten rotatorischen Bewegung der Wirkvorrichtung nachstellbar ist.

Gemäß einer weiteren Ausgestaltung dieser Alternative kann das Antriebssystem zusammen mit dem mit der translatorischen Bewegung gekoppelten System für eine zwangsbetätigte rotatorische Bewegung der Wirkvorrichtung in der Weise realisiert werden, daß die Kolbenstange eines Kolben-/Zylindersystems bzw. die Stößelstange des Federantriebssystems im Mittenbereich der Wirkvorrichtung angelenkt ist, und die beiden Enden der Wirkvorrichtung in zwei ortsfesten Führungen zur zwangsbetätigten rotatorischen Bewegung der Wirkvorrichtung abhängig vom Verfahrweg des Intrusionsschlittens drehbeweglich verschiebbar gehaltert sind.

Alternativ kann ein drehbewegliches Hebelsystem vorgesehen sein, welches sowohl an der Kolben- bzw. Stößelstange des Antriebssystems als auch an beiden Enden der Wirkvorrichtung angelenkt ist, und welches dabei so ausgelegt ist, daß bei einer Betätigung der Kolben- bzw. Stößelstange die Wirkvorrichtung sowohl translatorisch als auch damit zwangsgekoppelt rotatorisch bewegt wird.

Gemäß einer anderen Ausgestaltung der Erfindung können auch zwei Antriebssysteme vorgesehen sein, die beide mit der Wirkvorrichtung an unterschiedlichen Stellen angelenkt sind, derart, daß bei gleichförmiger Betätigung der Antriebe die Wirkvorrichtung translatorisch verschiebbar und bei ungleichförmiger Betätigung zugleich verdrehbar ist.

Weitere Ausgestaltungen und Vorteile der Erfindung ergeben sich anhand der Beschreibung von in den Zeichnungen dargestellten Ausführungsbeispielen. In den Ausführungsbeispielen ist die Wirkvorrichtung eine die Intrusion der Fußablage bzw. der Pedalerie nachstellende Fußplatte.

Es zeigen:
- Fig. 1: in einer schematischen Darstellung den Aufbau einer ersten Ausführungsform der erfindungsgemäßen Einrichtung zum Nachstellen der dynamischen Intrusion des Fußraumes eines Kraftfahrzeuges bei einem Frontalzusammenstoß mit einem Intrusionsschlitten,
- Fig. 2: eine erste Variante für das Antriebssystem für die Erzeugung einer impulsartigen, den Frontalzusammenstoß nachstellenden translatorischen Bewegung des Intrusionsschlittens der Fig. 1,
- Fig. 3: eine weitere Variante für ein Antriebssystem für die Erzeugung einer impulsartigen translatorischen bzw. rotatorischen Bewegung, die aus gleichen Kolbenwegen (translatorisch) oder unterschiedlichen Kolbenwegen (translatorisch und rotatorisch) resultiert,
- Fig. 4: ein weiteres Ausführungsbeispiel für ein Antriebssystem für die Erzeugung einer impulsartigen translatorischen Bewegung gekoppelt mit einer rotatorischen Bewegung der Fußplatte mittels einer Führung der Fußplatte in zwei ortsfesten Führungen und einem mittig angreifenden Antriebssystem,
- Fig. 5: eine ähnliche Anordnung wie in Fig. 4, jedoch mit einem Hebelsystem zwischen der Fußplatte und der Kolbenstange des Antriebssystems,
- Fig. 6: in einer Darstellung entsprechend Fig. 1 die Erzeugung einer zwangsbetätigten rotatorischen Bewegung der Fußplatte. abhängig vom Verfahrweg des Intrusionsschlittens über ein Zugseil, das an einem Ende mit einem ortsfesten Gegenstand verbunden ist und mit seinem anderen Ende auf der Welle einer Exzenter-Kurvenscheibe aufgerollt ist, und
- Fig. 7: in einer Darstellung entsprechend Fig. 1 eine weitere Alternative, zur Erzeugung einer impulsartigen Relativbewegung der Fußplatte gegenüber dem Fahrzeug mit einem Hebel-/Anschlagsystem.

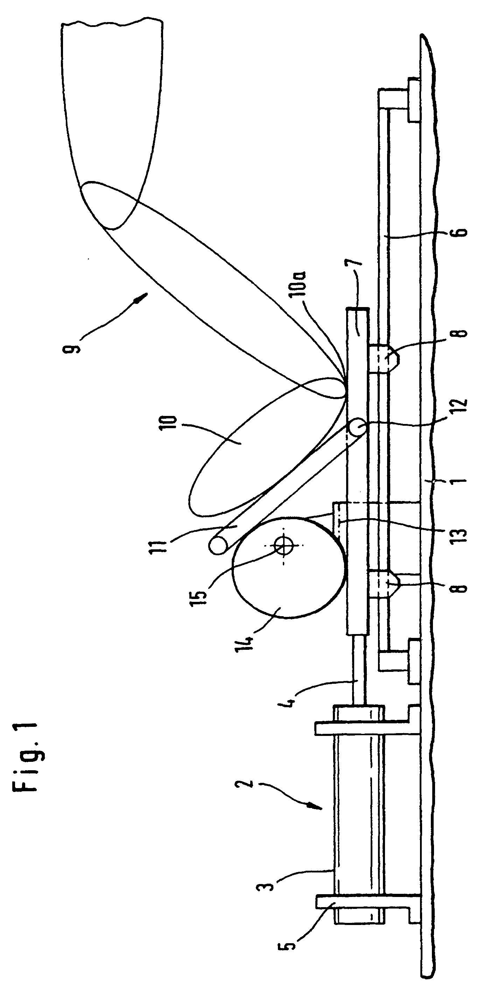

Die Fig. 1 zeigt in einer schematischen Darstellung den Aufbau einer Ausführungsform der erfindungsgemäßen Einrichtung beispielhaft zum Nachstellen der dynamischen Intrusion des Fußraumes eines Kraftfahrzeuges (Kfz) bei einem Frontalzusammenstoß. Diese Einrichtung kann auf dem Hauptschlitten einer einen Crash nachstellenden konventionellen Schlittenanlage, im vorliegenden Beispiel einer Hydropulsschlittenanlage, sozusagen als Zusatzteil zur zusätzlichen Überlagerung einer die dynamische Fußraumintrusion nachstellenden Bewegung, angeordnet sein. Sie kann auch stationär angeordnet sein.

Auf einer Grundplatte 1, die entweder auf dem Hauptschlitten der Hydropulsschlittenanlage oder stationär montiert ist, ist mittels Halterungen 5 ein Antriebssystem 2 für die Erzeugung einer impulsartigen, bei dem Frontalzusammenstoß auftretenden Relativbewegung des intrudierenden Fußraumes gegenüber dem Kfz angebracht. im Beispiel nach Fig. 1 wird das Antriebssystem 2 durch ein Kolben-/Zylindersystem, betrieben mit einem Gasgenerator, gebildet, das eine aus dem Gaszylinder 3 herausragende Kolbenstange 4 aufweist. Wird in dem Gaszylinder 3 ein gaserzeugender pyrotechnischer Treibsatz gezündet, so drückt das expandierende Gas die Kolbenstange 4 impulsartig nach rechts weg. Auf der Grundplatte 1 ist ferner eine lineare Führungsschiene 6 für einen Intrusionsschlitten 7 zum Nachstellen der Bewegung des Fußraumes des Kfz fest angeordnet, auf welcher der Intrusionsschlitten zwangsgeführt mittels Führungselemente 8 horizontal verschiebbar gehalten ist. Die vordere Stirnseite des Intrusionsschlittens 7 steht dabei mit der Kolbenstange 4 in Wirkeingriff. Bedingt durch die impulsartige Bewegung der Kolbenstange 4 bei einem simulierten Crash bewegt sich der Intrusionsschlitten 7 translatorisch nach rechts weg in den simulierten Fußraum eines PKW mit einem Dummy 9 als nachgestelltem PKW-Insasse.

Der Fuß 10 des Dummy ruht auf einer den Radkasten und die Spritzwand des PKW nachstellenden Fußplatte 11, die drehbar um den Punkt 12 an dem Intrusionsschlitten 7 angelenkt ist oder er steht um einen vorgegebenen Abstand davor, wie bei einer Bremsung im realen Fahrzeug.

Die erfindungsgemäße Einrichtung umfaßt ferner ein zweites, mit der Fußplatte 11 und dem Intrusionsschlitten 7 gekoppeltes System für die Erzeugung einer Kraft für eine zwangsbetätigte rotatorische Bewegung der Fußplatte 11 abhängig vom Verfahrweg des Intrusionsschlittens 7.

In Fig. 1 wird dieses System durch eine mit der Grundplatte 1 fest verbundene Zahnstange 13 in Verbindung mit einem mit der Zahnstange kämmenden Zahnrad, an dem über eine Keilwelle und Anbaunabe eine Kurvenscheibe 14 exzentrisch mit einem gemeinsamen Drehpunkt 15 befestigt ist, gebildet. Diese Kurvenscheibe 14, die auch durch einen Nocken ersetzbar ist, deckt in Fig. 1 das Zahnrad ab. Durch diese Zahnrad-/Zahnstangenkombination wird aus einer translatorischen Bewegung des Intrusionsschlittens eine Rotationsbewegung der Kurvenscheibe 14 erreicht. Durch den exzentrischen Aufbau der Kurvenscheibe wiederum vollführt bei einer Drehung der Kurvenscheibe die Fußraumplatte 11 eine Drehbewegung um den Anlenk-Befestigungspunkt 12. Dadurch wird der Dummy-Fuß 10 während des Crash-Verlaufes translatorisch nach rechts bewegt und gleichzeitig um sein Gelenk 10a gedreht. Die so erzeugte überlagerte Bewegung zwischen einer Translation und Rotation der Fußplatte 11 kann an den fahrzeugspezifischen Bewegungsablauf und damit an den Verletzungsmechanismus, wie er in realen Crash-Situationen auftreten würde, angepaßt werden.

Vorzugsweise befinden sich am Pneumatikzylinder 3, am Zahnstangen-/Zahnrad-Antrieb, an der Kurvenscheibe 14 und an dem Intrusionsschlitten 7 Einstellmöglichkeiten zur Variation der Einstellparameter für verschiedene Deformations-Charakteristiken.

Das Antriebssystem 2 mit dem pyrotechnischen Antrieb nach Fig. 1 kann, um eine fahrzeugspezifische Anpassung zu gewährleisten, mit einem oder mehreren Gastreibsätzen aufgebaut sein. Konstruktiv lassen sich sowohl einstufige Ein- oder Mehrkolbensysteme sowie mehrstufige Ein- oder Mehrkolbensysteme realisieren.

Das Antriebssystem 2 kann auf unterschiedliche Art und Weise realisiert werden. Anstelle des in Fig. 1 dargestellten pyrotechnischen Systems kann ein pneumatisches bzw. hydraulisches Zylinder-/Kolbensystem vorgesehen werden, bei dem stoßartig Druckluft bzw. Hydraulikflüssigkeit in den Zylinder eingeleitet wird und den Kolben mit seiner Kolbenstange bewegt. Auch kann ein federvorgespanntes Antriebssystem Anwendung finden, bei dem der stoßartige Impuls in der Weise erzeugt wird, daß eine vorgespannte Feder, die mit einem Stößel in Wirkverbindung steht, entklinkt wird.

Es ist auch eine Ausführung für die Betätigung des Intrusionssystems denkbar, die die Schlittenenergie der Hauptschlittenanlage, insbesondere der Hydropulsschlittenanlage ausnutzt, indem man die Bewegungsdifferenz zwischen dem Hauptschlitten dieser Schlittenanlage und einer an ihm in Führungsschienen verschiebbar gelagerten großen Trägheitsmasse, die bei der Schlittenbeschleunigung auftritt, ausnutzt, um den Intrusionsschlitten impulsartig zu bewegen.

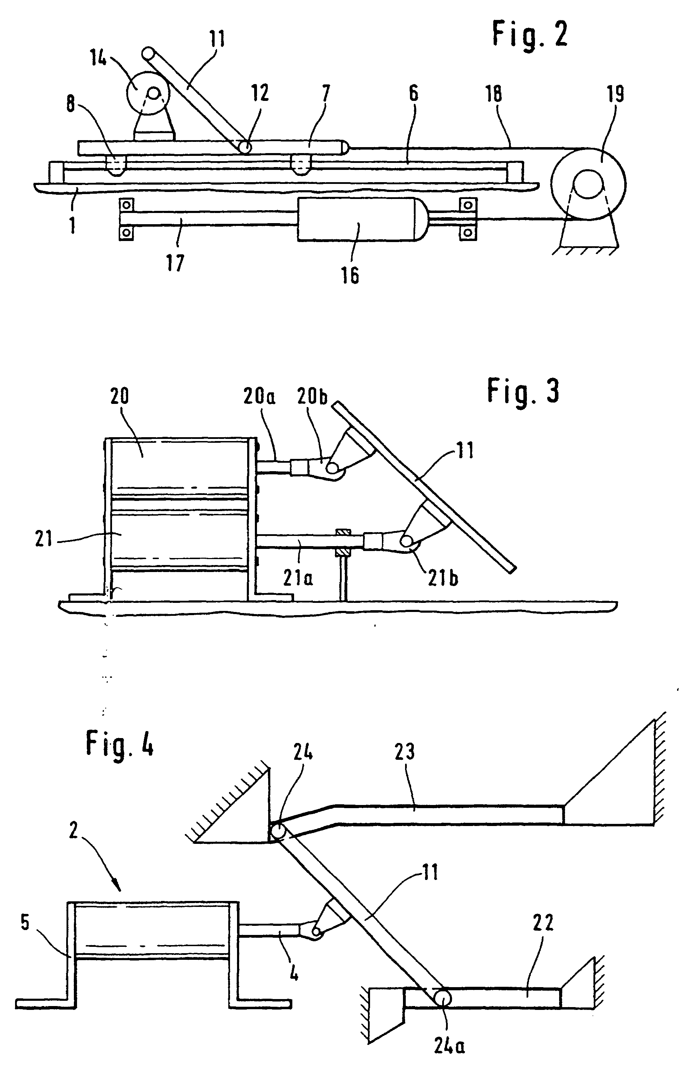

Eine derartige Ausführungsform ist schematisch in der Fig. 2 dargestellt. Diese Fig. 2 zeigt die Trägheitsmasse 16, die auf einer Führungsschiene 17 verschiebbar gelagert ist, die ihrerseits fest mit dem großen (nicht dargestellten) Hauptschlitten, hier der Hydropulsschlittenanlage, d.h. indirekt mit der Grundplatte 1, auf dem die Führungsschiene 6 für den Intrusionsschlitten 7 gehaltert ist, verbunden ist. Diese Trägheitsmasse 16 ist über ein Zugseil 18, umgelenkt über eine Rolle 19, mit dem Intrusionsschlitten 7 verbunden. Im übrigen ist die Einrichtung insbesondere hinsichtlich der Erzeugung einer Drehbewegung der Fußplatte 11 mittels einer Kurvenscheibe 14 entsprechend Fig. 1 aufgebaut. Soweit man sich auf den Einsatz der Intrusionsvorrichtung in Verbindung mit ihrer Beschleunigung durch die Hydropulsanlage beschränkt, ist diese Ausführungsform nach der Fig. 2 eine sehr vorteilhafte Ausführungsform, da sie verhältnismäßig einfach aufgebaut ist und die Antriebsenergie für den Intrusionsschlitten von der Hauptschlittenanlage aufgebracht wird.

Weitere Ausführungsformen sowohl für die Erzeugung der translatorischen als auch der überlagerten Rotationsbewegung der Fußplatte sind in den Fign. 3 bis 6 dargestellt, wobei in den Ausführungsformen nach den Fign. 3 bis 5 kein Intrusionsschlitten vorhanden ist.

So zeigt die Fig. 3 eine Anlenkung der Fußplatte 11 an zwei Antriebssysteme, im vorliegenden Beispiel an zwei Kolben-/Zylindersysteme 20,21 mit Kolbenstangen 20a und 21a, an denen die Fußplatte 11 mittels Anlenkungen 20b und 21b befestigt ist. Diese Befestigungen sind gelenkig und einseitig zusätzlich verschiebbar ausgeführt. Bei gleichem Hub führt dann die Fußplatte 11 eine translatorische Bewegung aus. Um eine Rotation zu erreichen, ist der Hub des einen Antriebssystems größer als der Hub des anderen Antriebssystems. Als Antriebe finden vorzugsweise Systeme Anwendung, die eine geführte Kolbenstange besitzen und sehr gut steuerbar sind, d.h. Hydraulik- und Pneumatik-Systeme. Allerdings ist eine derartige Führung bei großen Abständen und hohen Kräften sehr stark vertikal belastet, so daß zweckmäßig eine mechanische Unterstützung der Kolbenstangen durch Zusatzführungen vorgesehen ist, wie in Fig. 3 an der Kolbenstange 21a symbolisch angedeutet ist.

Die Fig. 4 zeigt eine verdrehbare Halterung der Fußplatte 11 mittels zweier Führungszapfen 24,24a in zwei ortsfesten Führungsschienen 22,23, die beispielsweise auf der Grundplatte oder im Fußraum angeordnet sind. Die Fußplatte 11 ist weiterhin mit einem Antriebssystem 2 entsprechend Fig. 1 verbunden, wobei jedoch die Kolbenstange 4 an der Fußplatte 11 verschiebbar angelenkt ist. Beide Schienen 22,23 geben die Bewegung durch die Zwangsführung der Fußplatte 11 vor und erzeugen sowohl eine translatorische wie auch eine rotatorische Bewegung. Um einen anderen Bewegungsablauf zu erzielen, müssen jeweils zwei andere Schienenführungen vorgesehen werden.

Auch bei dieser Ausführungsform nach Fig. 4 kommen bevorzugt Kolben-/Zylindersysteme mit einer Kolbenstange zur Anwendung.

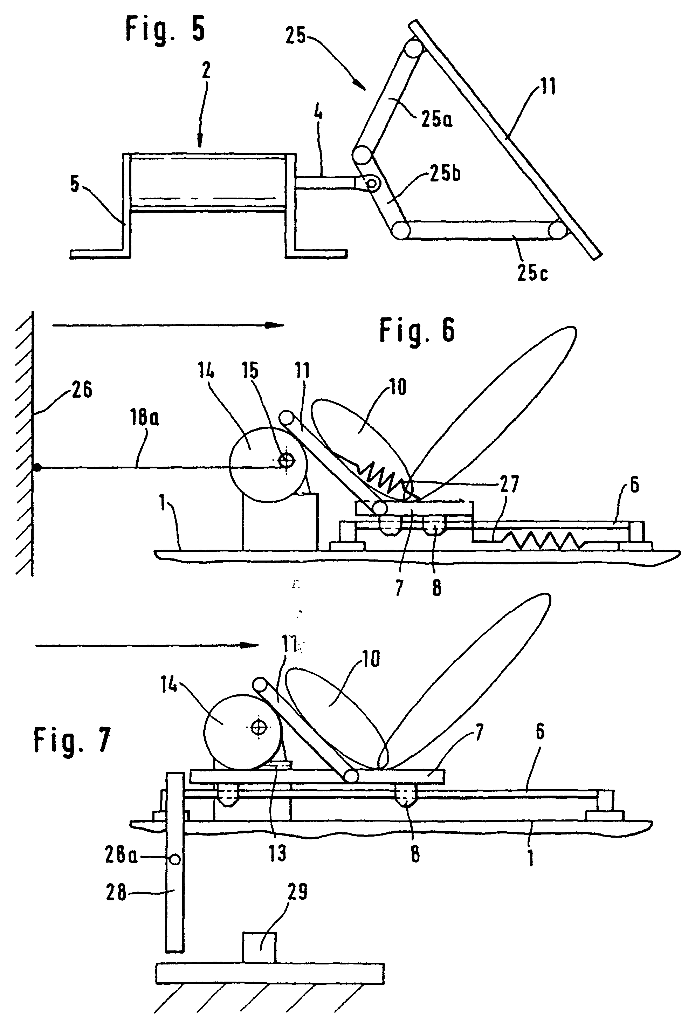

Die Fig. 5 zeigt die gelenkige Anbindung der Fußplatte 11 an ein Gelenk-Hebelsystem 25 mit drei gelenkig miteinander verbundenen Hebeln 25a,25b,25c, das an die Kolbenstange 4 des Antriebssystems 2 angelenkt ist. Durch dieses Gelenk-Hebelsystem wird bei Betätigung des Antriebssystems 2 eine definierte translatorische und rotatische Bewegung der Fußplatte 11 erzielt. Das Ändern der Bewegungsabläufe erfolgt durch Variation der Hebellängen und der Anbindungspunkte.

Die Fig. 6 zeigt einen Intrusionsschlittenaufbau entsprechend Fig. 1 (gleiche Teile tragen dieselbe Bezugsziffer), jedoch mit einer anderen Ausführung für die Erzeugung der zwangsgekoppelten Drehbewegung der Fußplatte 11. Anstelle der Drehung der Exzenter-Kurvenscheibe 14 durch eine Zahnrad-/Zahnstangenkombination gemäß Fig. 1 ist ein Seil 18a vorgesehen, das mit einem Ende an einem ortsfesten Gegenstand 26, z.B. einem feststehenden Katapult befestigt ist. Das andere Ende des Seiles 18a ist um die Welle 15 der Exzenter-Kurvenscheibe 14 gewickelt.

Bewegt sich der Schlittenaufbau vom Katapult 26 weg, so wird das Seil 18a von der Welle 15 abgerollt und versetzt die Exzenterscheibe 14 - und damit auch die Fußplatte 11 in Drehung und erzeugt zugleich eine Translationsbewegung. Durch zwei Federn 27 mit unterschiedlicher Steifigkeit sowie nicht dargestellte Dämpfer wird eine Zwangskopplung zwischen Translation und Rotation der Fußplatte 11 eingestellt.

Die Fig. 7 zeigt einen Intrusionsschlittenaufbau entsprechend Fig. 1 angeordnet auf dem Hauptschlitten (gleiche Teile tragen gleiche Bezugsziffern), jedoch mit einem anderen Antriebssystem zur Erzeugung der impulsartigen, bei dem Aufprall auftretenden Relativbewegung des intrudierenden Fahrzeugteiles, hier des vorderen Fußraumes, gegenüber dem Kraftfahrzeug. Zur Erzeugung dieser Relativbewegung ist an dem Hauptschlittenaufbau ein um den Punkt 28a drehbar angelenkter Hebel 28 vorgesehen. Kommt dieser in Kontakt mit einem ortsfesten Anschlag 29, dreht sich der Hebel 28 und verschiebt den Intrusionsschlitten 7 in den Fußraum der auf dem Hauptschlitten angeordneten Rohkarosse. Die Zwangskopplung zwischen Translation und der Rotationsbewegung der Fußplatte 11 erfolgt zweckmäßig, wie auch in Fig. 1 dargestellt, über die Zahnrad-/Zahnstangenkombination 13 und die Exzenter-Kurvenscheibe 14.

Aufgrund der vorstehenden Ausführungen ergeben sich für den Fachmann eine Fülle vom Kombinationsmöglichkeiten der einzelnen Antriebssysteme des Fußraum-Verfahrschlittens mit den Konstruktionen zur zwangsbetätigten Drehung der Fußplatte. Es kommt bei allen Kombinationsmöglichkeiten stets darauf an, daß einer linearen Bewegung der Fußplatte eine Drehung der Fußplatte überlagert wird, mit der geringstmöglichen kinematischen Beanspruchung der beteiligten Bewegungselemente und mit möglichst großen Änderungsmöglichkeiten der Bewegungsabläufe.

Ist die Wirkvorrichtung anstelle des Nachstellens der Fußablage als Fußplatte zum Nachstellen oder Aufnahme anderer Kraftfahrzeugteile ausgebildet, dann finden entsprechend modifizierte Einrichtungen gemäß den Fign. 1 bis 6 Anwendung.

## Patentansprüche

1. Einrichtung zum Nachstellen der dynamischen Intrusion von Fahrzeugteilen eines Kraftfahrzeuges bei einem Aufprall, mit:
- einem auf einer Grundplatte (1) verfahrbar angeordneten, die Bewegung des Fahrzeugteiles nachstellenden Intrusionsschlitten (7),
- einem auf den Intrusionsschlitten (7) einwirkenden Antriebssystem (2; 3-5; 16-18; 28, 29) zum Nachstellen der impulsartigen, bei dem Aufprall auftretenden Relativbewegung des intrudierenden Fahrzeugteiles gegenüber dem Kraftfahrzeug,
- einer Wirkvorrichtung (11, 12) zum Nachstellen des intrudierenden Fahrzeugteiles, die drehbar an dem Intrusionsschlitten (7) angelenkt ist, und
- einem mit der translatorischen Bewegung des Intrusionsschlittens (7) gekoppelten System (13, 14, 15; 18a, 26, 27) zum Nachstellen einer mit der Intrusion einhergehenden Drehbewegung des Fahrzeugteiles beim Zusammenprall abhängig vom Verfahrweg des Intrusionsschlittens (7).

2. Einrichtung nach Anspruch 1, **dadurch gekennzeichnet, daß** die Grundplatte (1) mit dem Intrusionsschlitten (7) und der Wirkvorrichtung (11, 12) stationär angeordnet ist.

3. Einrichtung nach Anspruch 1 oder 2, **dadurch gekennzeichnet, daß** das Antriebssystem (2) ein auf der Grundplatte (1) angeordnetes Kolben-/Zylindersystem (3) mit einer antreibenden Kolbenstange (4) ist, welches mittels eines Gasgenerators, oder hydraulisch oder pneumatisch betätigbar ist (Figur 1).

4. Einrichtung nach Anspruch 3, **dadurch gekennzeichnet, daß** ein mehrstufiges Ein- oder Mehrkolben-/Zylindersystem oder ein einstufiges Ein- oder Mehrkolben-/Zylindersystem als Antriebssystem (2) vorgesehen sind.

5. Einrichtung nach Anspruch 1 oder 2 **dadurch gekennzeichnet, daß** als Antriebssystem (2) eine vorgespannte, auf der Grundplatte (1) entklinkbar angeordnete Feder in Verbindung mit einer Stößelstange vorgesehen ist.

6. Einrichtung nach einem der Ansprüche 1 bis 5, **dadurch gekennzeichnet, daß** als gekoppeltes System eine Zahnrad-Zahnstangenkombination vorgesehen ist, wobei die Zahnstange (13) fest mit der Grundplatte und das Zahnrad mit einer Kurvenscheibe (14), an der die Wirkvorrichtung gegebenenfalls federvorgespannt aufliegt, verbunden ist (Figur 1).

7. Einrichtung nach einem der Ansprüche 1 bis 5 **dadurch gekennzeichnet, daß** zur Realisierung des gekoppelten Systems für eine zwangsbetätigte rotatorische Bewegung der Wirkvorrichtung abhängig vom Verfahrweg des lntrusionsschlittens (7) ein Zugseil (18a) vorgesehen ist, das mit einem Ende an einem ortsfesten Gegenstand (26) befestigt ist und mit dem anderen Ende auf der Welle einer Exzenter-Kurvenscheibe (14), an der die Wirkvorrichtung (11) aufiegt, aufgerollt ist (Fig. 6).

8. Kombination aus einer Einrichtung nach einem der Ansprüche 1 bis 5 und einem Hauptschlitten einer einen Crash simulierenden Hauptschlittenanlage, **dadurch gekennzeichnet, daß** die Grundplatte (1) mit dem Intrusionsschlitten (7) und der Wirkvorrichtung (11, 12) auf der Plattform eines Hauptschlittens einer einen Crash simulierenden Hauptschlittenanlage angebracht ist.

9. Kombination nach Anspruch 8, **dadurch gekennzeichnet, dass** die Hauptschlittenanlage als Hydropulsschlittenanlage ausgebildet ist.

10. Kombination nach Anspruch 9, **dadurch gekennzeichnet, daß** an dem Schlittenaufbau der Hydropulsschlittenanlage ein Vertikalhebel (28) drehbar angelenkt ist, dessen oberes Ende in Wirkeingriff mit dem Intrusionsschlitten (7) und dessen unteres Ende in Wirkeingriff mit einem ortsfesten Anschlag (29) bringbar ist (Fig. 7).

11. Kombination nach einem der Ansprüche 8 bis 10, **dadurch gekennzeichnet, daß** das Antriebssystem (2) auf die Ausnutzung der Schlittenenergie des Hauptschlittens der Hauptschlittenanlage ausgelegt ist, indem an dem Hauptschlitten eine Führung (17) für eine darauf verschiebbar gehalterte große träge Masse (16), die über ein Zugseil (18) und eine Umlenkrolle (19) mit dem Intrusionsschlitten (17) verbunden ist, angebracht ist (Figur 2).

12. Einrichtung zum Nachstellen der dynamischen Intrusion von Fahrzeugteilen eines Kraftfahrzeuges bei einem Aufprall, mit:
- einer Wirkvorrichtung (11) zum Nachstellen des intrudierenden Fahrzeugteiles,
- einem Kolben /Zylinder- oder Feder-Antriebssystem (2; 20, 21) in Verbindung mit einer Übertragungsmechanik (20b, 21b; 22, 23, 24; 25), an der die Wirkvorrichtung (11) angelenkt ist, und die so ausgebildet sind, daß eine impulsartige, bei dem Aufprall auftretende Relativbewegung des intrudierenden Fahrzeugteiles gegenüber dem Kraftfahrzeug in Form einer translatorischen und einer überlagerten rotatorischen Bewegung der Wirkvorrichtung (11) nachstellbar ist.

13. Einrichtung nach Anspruch 12, **dadurch gekennzeichnet, daß** die Kolbenstange (4) des Kolben-/Zylinderantriebssystems bzw. die Stößelstange des Federantriebssystem im Mittelbereich der Wirkvorrichtung (11) angelenkt ist, und die beiden Enden dieser Wirkvorrichtung (11) in zwei ortsfesten Führungen (22, 23), zur translatorischen und zwangsbetätigten rotatorischen Bewegung der Wirkvorrichtung (11) verschiebbar gehaltert sind (Fig. 4).

14. Einrichtung nach Anspruch 12, **dadurch gekennzeichnet, daß** ein drehbewegliches Hebelsystem (25), das sowohl an der Kolbenstange (4) des Kotben-/Zylinderantriebssystems bzw. der Stößelstange des Federantriebssystems als auch an der Wirkvorrichtung (11) angelenkt ist, vorgesehen ist, und welches so ausgelegt ist, daß bei einer Betätigung der Kolben- bzw. Stößelstange (4) die Wirkvorrichtung (11) sowohl translatorisch als auch damit zwangsgekoppelt rotatorisch beweglich wird (Fig. 5).

15. Einrichtung nach Anspruch 12, **dadurch gekennzeichnet, daß** zwei Antriebssysteme (20, 21) vorgesehen sind, die beide an der Wirkvorrichtung (11) an unterschiedlichen Stellen angelenkt sind, derart, daß bei gleichförmiger Betätigung der Antriebe die Wirkvorrichtung (11) translatorisch verschiebbar und bei ungleichförmiger Betätigung zugleich verdrehbar ist (Figur 3).

16. Einrichtung nach einem der Ansprüche 1 bis 7, Kombination nach einem der Ansprüche 8 bis 11 oder Einrichtung nach einem der Ansprüche 12 bis 15, **dadurch gekennzeichnet, daß** die Wirkvorrichtung (11) als Fußplatte zum Nachstellen der Fußablage und/oder der Pedalerie ausgebildet ist.

17. Einrichtung nach einem der Ansprüche 1 bis 7, Kombination nach einem der Ansprüche 8 bis 11 oder Einrichtung nach einem der Ansprüche 12 bis 15, **dadurch gekennzeichnet, daß** die Wirkvorrichtung zum Nachstellen der Fahrzeughinterwand und der Sitzanlage des Kraftfahrzeuges ausgebildet ist.

18. Kombination aus einer Einrichtung nach einem der Ansprüche 1 bis 7, aus einer Kombination nach einem der Ansprüche 8 bis 11 oder aus einer Einrichtung nach einem der Ansprüche 12 bis 15 und einem Lenksystems eines Kraftfahrzeuges, bestehend aus Lenkrad und Lenksäule, **dadurch gekennzeichnet, daß** die Wirkvorrichtung zur Aufnahme des Lenksystems ausgebildet ist.

19. Kombination aus einer Einrichtung nach einem der Ansprüche 1 bis 7, aus einer Kombination nach einem der Ansprüche 8 bis 11 oder aus einer Einrichtung nach einem der Ansprüche 12 bis 15 und einer Instrumententafel mit gegebenenfalls vorhandenen Kniepolstern, **dadurch gekennzeichnet, daß** die Wirkvorrichtung zur Aufnahme der Instrumententafel ausgebildet ist.

20. Kombination aus einer Einrichtung nach einem der Ansprüche 1 bis 7, aus einer Kombination nach einem der Ansprüche 8 bis 11 oder aus einer Einrichtung nach einem der Ansprüche 12 bis 15 und einem Teil einer Seitenwand eines Kraftfahrzeuges, **dadurch gekennzeichnet daß** die Wirkvorrichtung zur Aufnahme eines Teiles der Seitenwand ausgebildet ist.

21. Kombination aus einer Einrichtung nach einem der Ansprüche 1 bis 7, aus einer Kombination nach einem der Ansprüche 8 bis 11 oder aus einer Einrichtung nach einem der Ansprüche 12 bis 15 und einem Dachteil eines Kraftfahrzeuges, **dadurch gekennzeichnet, daß** die Wirkvorrichtung zur Aufnahme eines Dachteiles ausgebildet ist.

## Claims

1. Device for reconstructing the dynamic intrusion of parts of a motor vehicle upon a collision, having:
- an intrusion slide (7) which is arranged movably on a baseplate (1) and reconstructs the movement of the vehicle part,
- a drive system (2; 3-5; 16-18; 28, 29) which acts on the intrusion slide (7) and is intended for reconstructing the pulse-like relative movement, occurring during the collision, of the intruding vehicle part in relation to the motor vehicle,
- an active device (11, 12) for reconstructing the intruding vehicle part, which device is coupled rotatably to the intrusion slide (7), and
- a system (13, 14, 15; 18a, 26, 27) which is connected to the translatory movement of the intrusion slide (7) and is intended for reconstructing a rotational movement, which is associated with the intrusion, of the vehicle part during the crash as a function of the travel of the intrusion slide (7).

2. Device according to Claim 1, **characterized in that** the baseplate (1) with the intrusion slide (7) and the active device (11, 12) is arranged in a stationary manner.

3. Device according to Claim 1 or 2, **characterized in that** the drive system (2) is a piston/cylinder system (3) which is arranged on the baseplate (1) and has a driving piston rod (4) and which can be actuated by means of a gas generator, or hydraulically or pneumatically (Figure 1).

4. Device according to Claim 3, **characterized in that** a multi-stage single-piston or multi-piston/cylinder system or a single-stage single-piston or multi-piston/cylinder system is provided as the drive system (2).

5. Device according to Claim 1 or 2, **characterized in that** a prestressed spring, which is arranged unlatchably on the baseplate (1), in conjunction with a push rod is provided as the drive system (2).

6. Device according to one of Claims 1 to 5, **characterized in that** a gearwheel/rack combination is provided as the connected system, the rack (13) being connected fixedly to the baseplate and the gearwheel being connected to a cam plate (14) on which the active device rests, if appropriate under spring prestress (Figure 1).

7. Device according to one of Claims 1 to 5, **characterized in that**, to bring about the connected system for a compulsorily actuated, rotatory movement of the active device as a function of the travel of the intrusion slide (7), a traction cable (18a) is provided, fastened at one end to a positionally fixed object (26) and rolled up at the other end on the shaft of an eccentric cam plate (14) on which the active device (11) rests (Fig. 6).

8. Combination of a device according to one of Claims 1 to 5 and a main slide of a main slide system simulating a crash, **characterized in that** the baseplate (1) with the intrusion slide (7) and the active device (11, 12) is fixed on the platform of a main slide of a main slide system simulating a crash.

9. Combination according to Claim 8, **characterized in that** the main slide system is designed as a hydropulse slide system.

10. Combination according to Claim 9, **characterized in that** a vertical lever (28) is coupled rotatably to the slide construction of the hydropulse slide system, the upper end of which lever can be brought into active engagement with the intrusion slide (7) and the lower end of which lever can be brought into active engagement with a positionally fixed stop (29) (Fig. 7).

11. Combination according to one of Claims 8 to 10, **characterized in that** the drive system (2) is designed for using the slide energy of the main slide of the main slide system by a guide (17) for a large inert mass (16), which is secured displaceably thereon and is connected to the intrusion slide (17) via a traction cable (18) and a deflection pulley (19), being fixed on the main slide (Figure 2).

12. Device for reconstructing the dynamic intrusion of parts of a motor vehicle upon a collision, having:
- an active device (11) for reconstructing the intruding vehicle part,
- a piston/cylinder drive system or spring drive system (2; 20, 21) in conjunction with a transmission mechanism (20b, 21b; 22, 23, 24; 25), to which the active device (11) is coupled, and which systems are designed in such a manner that a pulse-like relative movement, occurring during the collision, of the intruding vehicle part in relation to the motor vehicle can be reconstructed in the form of a translatory and a superimposed rotatory movement of the active device (11).

13. Device according to Claim 12, **characterized in that** the piston rod (4) of the piston/cylinder drive system or the push rod of the spring drive system is coupled in the central region of the active device (11), and the two ends of this active device (11) are secured displaceably in two positionally fixed guides (22, 23) to bring about the translatory and compulsorily rotatory movement of the active device (11) (Fig. 4).

14. Device according to Claim 12, **characterized in that** a rotationally movable lever system (25) is provided coupled both to the piston rod (4) of the piston/cylinder drive system or the push rod of the spring drive system and to the active device (11), and is designed in such a manner that, when the piston rod or push rod (4) is actuated, the active device (11) is movable both in a translatory manner and therefore in a compulsorily connected rotatory manner (Fig. 5).

15. Device according to Claim 12, **characterized in that** two drive systems (20, 21) are provided and are both coupled to the active device (11) at different points in such a manner that, when the drives are uniformly actuated, the active device (11) can be displaced in a translatory manner and, when they are non-uniformly actuated, can be rotated at the same time (Figure 3).

16. Device according to one of Claims 1 to 7, combination according to one of Claims 8 to 11 or device according to Claims 12 to 15, **characterized in that** the active device (11) is designed as a footplate for reconstructing the footrest and/or the pedals.

17. Device according to one of Claims 1 to 7, combination according to one of Claims 8 to 11 or device according to one of Claims 12 to 15, **characterized in that** the active device is designed for reconstructing the rear wall of the vehicle and the seat system of the motor vehicle.

18. Combination of a device according to one of Claims 1 to 7, of a combination according to one of Claims 8 to 11 or of a device according to one of Claims 12 to 15 and a steering system of a motor vehicle, comprising steering wheel and steering column, **characterized in that** the active device is designed for receiving the steering system.

19. Combination of a device according to one of Claims 1 to 7, of a combination according to one of Claims 8 to 11 or of a device according to one of Claims 12 to 15 and an instrument panel with knee cushions present if appropriate, **characterized in that** the active device is designed for receiving the instrument panel.

20. Combination of a device according to one of Claims 1 to 7, of a combination according to one of Claims 8 to 11 or of a device according to one of Claims 12 to 15 and part of a side wall of a motor vehicle, **characterized in that** the active device is designed for receiving part of the side wall.

21. Combination of a device according to one of Claims 1 to 7, of a combination according to one of Claims 8 to 11 or of a device according to one of Claims 12 to 15 and a roof part of a motor vehicle, **characterized in that** the active device is designed for receiving a roof part.

## Revendications

1. Dispositif pour reconstruire l'intrusion dynamique de parties d'un véhicule automobile lors d'une collision, avec:
- un chariot d'intrusion (7) mobile sur une plaque de base (1) et reconstituant le mouvement de la partie de véhicule,
- un système d'entraînement (2; 3-5; 16-18; 28, 29) agissant sur le chariot d'intrusion (7) pour reconstituer le mouvement impulsionnel relatif de la partie de véhicule refoulée produit lors de la collision par rapport au véhicule automobile,
- un dispositif actif (11, 12) pour simuler la partie de véhicule automobile refoulée, qui est articulé en rotation sur le chariot d'intrusion (7), et
- un système (13, 14, 15; 18a, 26, 27) couplé avec le mouvement de translation du chariot d'intrusion (7) pour reconstituer un mouvement de rotation de la partie de véhicule accompagnant l'intrusion lors de la collision, en fonction de la course de déplacement du chariot d'intrusion (7).

2. Dispositif selon la revendication 1, **caractérisé en ce que** la plaque de base (1) avec le chariot d'intrusion (7) et le dispositif actif (11, 12) est stationnaire.

3. Dispositif selon la revendication 1 ou 2, **caractérisé en ce que** le système d'entraînement (2) est un système à piston-cylindre (3) avec une tige de piston motrice (4) disposé sur la plaque de base (1), qui peut être actionné au moyen d'un générateur de gaz ou par voie hydraulique ou pneumatique (Fig. 1).

4. Dispositif selon la revendication 3, **caractérisé en ce qu'**il est prévu un système à plusieurs étages à un ou plusieurs pistons/cylindres ou un système à un étage à un ou plusieurs pistons/cylindres pour le système d'entraînement (2).

5. Dispositif selon la revendication 1 ou 2, **caractérisé en ce qu'**il est prévu comme système d'entraînement (2) un ressort précontraint disposé de façon décrochable sur la plaque de base (1), en liaison avec une tige de poussoir.

6. Dispositif selon l'une quelconque des revendications 1 à 5, **caractérisé en ce qu'**il est prévu comme système couplé une combinaison roue dentée-crémaillère, la crémaillère (13) étant fixée à la plaque de base et la roue dentée étant fixée à une came (14), sur laquelle le dispositif actif est appliqué, éventuellement avec un ressort précontraint (Fig. 1).

7. Dispositif selon l'une quelconque des revendications 1 à 5, **caractérisé en ce qu'**il est prévu, pour la réalisation du système couplé pour un mouvement rotatif forcé du dispositif actif en fonction de la course de déplacement du chariot d'intrusion (7), un câble de traction (18a) qui est fixé par une première extrémité à un objet fixe (26) et est enroulé par son autre extrémité sur l'arbre d'une came excentrique (14), sur laquelle le dispositif actif (11) est appliqué (Fig. 6).

8. Combinaison d'un dispositif selon l'une quelconque des revendications 1 à 5 et d'un chariot principal d'une installation de chariot principal de simulation de collision, **caractérisée en ce que** la plaque de base (1) avec le chariot d'intrusion (7) et le dispositif actif (11, 12) est installée sur la plate-forme d'un chariot principal d'une installation de chariot principal de simulation de collision.

9. Combinaison selon la revendication 8, **caractérisée en ce que** l'installation de chariot principal est une installation de chariot à impulsion hydraulique.

10. Combinaison selon la revendication 9, **caractérisée en ce qu'**un levier vertical (28) est articulé en rotation sur la superstructure du chariot de l'installation de chariot à impulsion hydraulique, dont l'extrémité supérieure peut venir en prise active avec le chariot d'intrusion (7) et dont l'extrémité inférieure peut venir en prise active avec une butée fixe (29) (Fig. 7).

11. Combinaison selon l'une quelconque des revendications 8 à 10, **caractérisée en ce que** le système d'entraînement (2) est basé sur l'utilisation de l'énergie du chariot principal de l'installation de chariot principal, par le fait qu'il y a sur le chariot principal un guide (17) pour une grosse masse inerte (16) coulissant sur celui-ci, qui est reliée au chariot d'intrusion (17) par un câble de traction (18) et une poulie de renvoi (19) (Fig. 2).

12. Dispositif pour reconstruire l'intrusion dynamique de parties d'un véhicule automobile lors d'une collision, avec
- un dispositif actif (11) pour reconstruire la partie de véhicule refoulée,
- un système d'entraînement (2; 20, 21) à piston/cylindre ou à ressort en liaison avec un mécanisme de transmission (20b, 21b; 22, 23, 24; 25), sur lequel le dispositif actif (11) est articulé, et qui sont configurés de telle façon qu'un mouvement impulsionnel relatif de la partie de véhicule refoulée, survenant lors de la collision, par rapport au véhicule automobile puisse être reconstitué sous la forme d'un mouvement de translation et d'un mouvement de rotation superposé du dispositif actif (11).

13. Dispositif selon la revendication 12, **caractérisé en ce que** la tige de piston (4) du système d'entraînement à piston/cylindre respectivement la tige de poussoir du système d'entraînement à ressort est articulée dans sa région centrale au dispositif actif (11), et les deux extrémités de ce dispositif actif (11) sont maintenues de façon coulissante dans deux guides fixes (22, 23) en vue du mouvement de translation et de rotation forcée du dispositif actif (11) (Fig. 4).

14. Dispositif selon la revendication 12, **caractérisé en ce qu'**il est prévu un système de leviers pivotants (25), qui est articulé aussi bien à la tige de piston (4) du système d'entraînement à piston/cylindre respectivement à la tige de poussoir du système d'entraînement à ressort qu'au dispositif actif (11), et qui est conçu de telle façon que, lors d'un actionnement de la tige de piston respectivement de la tige de poussoir (4), le dispositif actif (11) soit déplacé aussi bien en translation qu'en rotation forcée couplée à celle-ci (Fig. 5).

15. Dispositif selon la revendication 12, **caractérisé en ce qu'**il est prévu deux systèmes d'entraînement (20, 21), qui sont tous les deux articulés sur le dispositif actif (11) en des points différents, de telle façon que, lors d'un actionnement uniforme des entraînements le dispositif actif (11) soit mobile en translation et lors d'un actionnement non uniforme, il soit en même temps mobile en rotation (Fig. 3).

16. Dispositif selon l'une quelconque des revendications 1 à 7, combinaison selon l'une quelconque des revendications 8 à 11 ou dispositif selon l'une quelconque des revendications 12 à 15, **caractérisé en ce que** le dispositif actif (11) est configuré en une plaque de pied pour reconstruire le pose-pieds et/ou la pédalerie.

17. Dispositif selon l'une quelconque des revendications 1 à 7, combinaison selon l'une quelconque des revendications 8 à 11 ou dispositif selon l'une quelconque des revendications 12 à 15, **caractérisé en ce que** le dispositif actif est configuré pour reconstruire la paroi arrière du véhicule et le support des sièges du véhicule automobile.

18. Combinaison d'un dispositif selon l'une quelconque des revendications 1 à 7, d'une combinaison selon l'une quelconque des revendications 8 à 11 ou d'un dispositif selon l'une quelconque des revendications 12 à 15 et d'un système de direction d'un véhicule automobile, se composant d'un volant et d'une colonne de direction, **caractérisée en ce que** le dispositif actif est configuré pour recevoir le système de direction.

19. Combinaison d'un dispositif selon l'une quelconque des revendications 1 à 7, d'une combinaison selon l'une quelconque des revendications 8 à 11 ou d'un dispositif selon l'une quelconque des revendications 12 à 15 et d'un tableau de bord éventuellement garni de coussins pour les genoux, **caractérisée en ce que** le dispositif actif est configuré pour recevoir le tableau de bord.

20. Combinaison d'un dispositif selon l'une quelconque des revendications 1 à 7, d'une combinaison selon l'une quelconque des revendications 8 à 11 ou d'un dispositif selon l'une quelconque des revendications 12 à 15 et d'une partie d'une paroi latérale d'un véhicule automobile, **caractérisée en ce que** le dispositif actif est configuré pour recevoir une partie de la paroi latérale.

21. Combinaison d'un dispositif selon l'une quelconque des revendications 1 à 7, d'une combinaison selon l'une quelconque des revendications 8 à 11 ou d'un dispositif selon l'une quelconque des revendications 12 à 15 et d'une partie de toit d'un véhicule automobile, **caractérisée en ce que** le dispositif actif est configuré pour recevoir une partie de toit.
